# EUROPEAN PATENT SPECIFICATION

(11) **EP 3 001 016 B1**
(45) Date of publication and mention of the grant of the patent: **18.04.2018**
(21) Application number: 13885203.3
(22) Date of filing: 22.05.2013
(51) Int. Cl.: F02D 11/02, B62K 23/04, F02B 61/02

(54) **OPERATION UNIT STRUCTURE FOR SADDLE-TYPE VEHICLE**
OPERATIONSEINHEITSSTRUKTUR FÜR SATTELFAHRZEUG
STRUCTURE D'UNITÉ DE FONCTIONNEMENT DESTINÉE À UN VÉHICULE DU TYPE À SELLE

(43) Date of publication of application: 30.03.2016
(73) Proprietor: Honda Motor Co., Ltd., Minato-ku Tokyo 107-8556 (JP)
(72) Inventor: MAEDA, Tadamasa, Wako-shi Saitama 351-0193 (JP); YAMAMOTO, Takashi, Wako-shi Saitama 351-0193 (JP)
(74) Representative: Brevalex
(86) International application number: PCT/JP2013/064162
(87) International publication number: WO 2014/188527

(56) References cited:
- FR-A- 1 214 528
- JP-A- 2000 330 660
- JP-A- 2003 193 869
- JP-A- 2012 107 571
- JP-A- 2012 107 571
- JP-A- 2013 007 321
- US-A1- 2010 089 365

## Description

### TECHNICAL FIELD

The present invention relates to an operation unit structure for a saddle-type vehicle that has a throttle cable for operating a throttle valve according to an operation of a throttle grip, and a throttle housing for holding the throttle cable.

### BACKGROUND ART

In a saddle-type vehicle for a motorcycle or the like is known a structure having a throttle grip which is assembled to be rotatable relatively to a handle pipe, a throttle valve for adjusting the amount of air to be supplied to an internal combustion engine, a throttle cable for operating the throttle valve according to an operation of the throttle grip and a throttle housing for holding the throttle cable.

In this type of structure, two throttle cables for operating the throttle valve to an opening side and a closing side are provided, the throttle housing is divided into two parts in the vehicle width direction, the outer cables of both the throttle cables are pinched in one part of the throttle housing while covered by the other part of the throttle housing (see Patent Document 1, for example).

### PRIOR ART DOCUMENT

Patent Document 1: JP-A-2013-7321

US2010/0089365A1 discloses an operation unit structure for a saddle-type vehicle.

### SUMMARY OF THE INVENTION

### Problem to be solved by the Invention

It is necessary to route throttle cables while the throttle cables are bent along the turning direction of a throttle grip. In the above prior art, the outer cables of the throttle cables are also bent together with the throttle cables in the throttle housing, and thus it has been difficult to greatly bend the throttle cables because of restriction to flexure degree of the outer cables. Therefore, it has been desired to enhance the degree of freedom for the handling of the throttle cables.

Furthermore, it has been also desired to easily exchange the throttle cables, and some users have desire to exchange the throttle cables one by one.

The present invention has been implemented in view of the foregoing situation, and has an object to provide an operation unit structure for a saddle-type vehicle that can enhance the degree of freedom for the handling of throttle cables, and facilitate a maintenance work such as cable exchange, etc.

### Means of solving the Problem

The above object is attained with the invention according to independent claim 1. According to the construction, as compared with a case where the cable outer is bent, the degree of freedom of routing the throttle cable can be more greatly enhanced, the throttle cable can be easily separated, and the maintenance work such as cable exchange, etc. can be easily performed.

In the above construction, the throttle cable (101, 102) may have an open-side cable (101) that actuates the throttle valve (45V) to an open side in accordance with an opening operation of the throttle grip (65), and a close-side cable (102) that actuates the throttle valve (45V) to a close side in accordance with a closing operation of the throttle grip (65), and the two cables (101, 102) may be held by the cable holders (91, 92) of the slider (90).

According to this construction, the two throttle cables can be exchanged one by one, and the cost associated with the maintenance can be reduced.

In the above construction, the cable holder (91, 92) may have a deforming portion (111) that holds the end portion of the cable outer (101A, 102A) and spreads out in a radial direction of the cable outer (101A, 102A) when the end portion of the cable outer (101A, 102A) is pulled out, and the throttle housing (66) may pinch the deforming portion (111) to restrict spread-out in the radial direction of the deforming portion (111).

According to this construction, the slip-out of the cable outer can be efficiently prevented by using the pinching force of the throttle housing, and the cable outer can be easily detached by detaching the throttle housing.

In the above construction, an end cap (120) having a larger outer diameter than the outer diameter of the cable outer (101A, 102A) may be provided to the end portion of the cable outer (101A, 102A), the cable holder (91, 92) may have a fitting hole portion (110) in which the cable outer (101A, 102A) is inserted together with the end cap (120), an insertion-side end portion (111) of the fitting hole portion (110) may be configured to have a hole diameter smaller than the outer diameter of the end cap (120), and provided with a slit (113) along in the longitudinal direction of the cable so as to be increasable in diameter, and the throttle housing (66) may pinch the fitting hole portion (110) to restrict spread in the radial direction of the cable holder (91, 92).

In the above construction, the holding and assembling of the cable outer can be easilyperformedwith a simple construction, and the cost can be reduced. According to the invention, the throttle grip (65) is be provided with a stopper portion (65C1, 65C2) having a face in a grip rotating direction, and the slider (65) is be provided with a stopper receiving portion (96, 97) with which the stopper portion (65C1, 65C2) is brought into contact to restrict a rotation range of the throttle grip (65).

According to this construction, the load occurring due to the contact can receive the whole throttle housing through the slider, the rigidity of the throttle housing can be optimized, and the weight can be reduced.

In the above construction, the contact faces of the stopper portion (65C1, 65C2) and the stopper receiving portion (96, 97) may be formed along a plane extending in the radial direction from the rotational center (C1) of the throttle grip (65).

According to this construction, the load can be received by the whole contact faces, the rigidity of the contact faces can be optimized, the weight can be reduced, and the excellent operability can be implemented.

In the above construction, a positioning and fitting portion (95, 83) for positioning the slider (90) and the throttle housing (66) at plural places may be provided, and the slider (90) and the throttle housing (66) may be separated from each other at positions other than the positioning and fitting portion (95, 83) under an non-operation state of the throttle grip (65) .

In the above construction, the end cap (120) may be provided with a waterproof seal (131) for blocking the gap between the cable outer (101A, 102A) and the core wire (101B, 102B).

According to this construction, infiltration of rain water or the like into the core wire can be suppressed, and the durability can be enhanced.

In the above construction, the throttle housing (66) may have a cable opening (65H) in which the throttle cable (101, 102) is inserted, and may be provided with a seal member (133) for blocking the gap between the cable opening (65H) and the throttle cable (101, 102).

According to this construction, infiltration of rainwater, dust, etc. into the throttle housing can be suppressed, the durability can be increased.

### Effect of the Invention

According to the present invention, there are provided the slider that is pinched by the split-structure throttle housing and guides the bent portion of the core wire drawn out from the cable outer of the throttle cable, and the cable holder that is provided to the slider, restricts the movement in the longitudinal direction of the throttle cable and is configured so as to make the throttle cable separable from the slider. Therefore, the degree of freedom of the routing the throttle cable can be enhanced, and the maintenance work such as cable exchange, etc. can be easily performed.

The throttle cable has the open-side cable for actuating the throttle valve to the open side in accordance with the opening operation of the throttle grip and the closing cable for actuating the throttle valve to the close side in accordance with the closing operation of the throttle grip. When the two cables are held by the cable holders of the slider, the two throttle cables can be exchanged one by one.

The cable holder holds the end portion of the cable outer, and has the deforming portion which spreads out in the radial direction of the cable outer when the end portion of the cable outer is pulled. When the throttle housing pinches the deforming portion to restrict the spread in the radial direction, the slip-out of the cable outer can be efficiently prevented by using the pinching force of the throttle housing, and the cable outer can be easily detached by detaching the throttle housing.

The end portion of the cable outer is provided with the end cap whose outer diameter is larger than the outer diameter of the cable outer, the cable holder has the fitting hole portion in which the cable outer is inserted together with the end cap, the insertion-side end portion of the fitting hole portion is configured to have a hole diameter smaller than the outer diameter of the end cap, andprovidedwith the slit along in the longitudinal direction of the cable so as to be increasable in diameter, and the throttle housing pinches the fitting hole portion (110) to restrict spread in the radial direction of the cable holder. Accordingly, the holding and assembling of the cable outer can be easily performed.

The throttle grip is provided with the stopper portion having the face in the grip rotating direction, and the slider is provided with the stopper receiving portion with which the stopper portion is brought into contact to restrict the rotation range of the throttle grip. Accordingly, the load occurring due to the contact can be received by the whole throttle housing through the slider.

Furthermore, the contact faces of the stopper portion and the stopper receiving portion are formed along the plane extending in the radial direction from the rotational center of the throttle grip. Accordingly, the load can be received by the whole contact faces.

Furthermore, the positioning and fitting portion for positioning the slider and the throttle housing at plural places is provide, and under the non-operation state of the throttle grip, the slider and the throttle housing are separated from each other out of the positioning and fitting portion. Accordingly, the load transmitted from the slider to the throttle housing can be properly controlled.

The end cap is provided with the waterproof seal for blocking the gap between the cable outer and the core wire, whereby infiltration of rain water or the like into the core wire can be suppressed, and the durability can be enhanced.

The throttle housing has the cable opening in which the throttle cable is inserted, the seal member for blocking the gap between the cable opening and the throttle cable is provided, whereby infiltration of rain water, dust or the like into the throttle housing can be suppressed, and the durability can be enhanced.

### BRIEF DESCRIPTION OF THE DRAWINGS

Fig. 1 is a left side view showing a motorcycle according to an embodiment of the present invention.
Fig. 2 is a view taken when a handle and the peripheral construction thereof are viewed from the upper side.
Fig. 3 is a view taken when the right end portion of the handle and the peripheral construction thereof are viewed from the back side of a vehicle.
Fig. 4 is an exploded perspective view showing a throttle housing and the peripheral construction thereof.
Fig. 5(A) is a diagram showing the throttle housing and the internal construction thereof, and Fig. 5(B) is a cross-sectional view taken along X-X of Fig. 5(A).
Fig. 6 is a side cross-sectional view showing a cable winding and hooking portion together with core wires.
Fig. 7(A) is a perspective view showing a slider, and Fig. 7(B) is a view taken when the slider is viewed from the outside in the vehicle width direction.
Fig. 8(A) is a view taken when the slider is viewed from the back side of the vehicle body, and Fig. 8(B) is view taken when the slider is viewed from the inside in the vehicle width direction.
Fig. 9(A) is a perspective view showing an assembling state of a core wire guide portion and a cable winding and hooking portion, and Fig. 9(B) is a partially enlarged perspective view.
Fig. 10(A) shows a housing half body, Fig. 10(B) is a diagram showing the arrangement of the slider on the housing half body, and Fig. 10(C) is a Y-Y cross-sectional view of Fig. 10(B).
Fig. 11(A) is a diagram showing the cross-sectional structure of the cable holder together with the throttle housing, Fig. 11(B) is a diagram showing the end portion structure of the cable outer, and Fig. 11(C) is a diagram showing the operation of the cable holder.
Fig. 12(A) is a diagram showing an aspect that the end cap is provided with a waterproof seal, and Fig. 12(B) is a diagram showing an aspect that the throttle housing is provided with a seal member.

### MODES FOR CARRYING OUT THE INVENTION

An embodiment according to the present invention will be described hereunder with reference to the drawings. In the description, the description on front-and-rear, right-and-left and up-and-down directions are the same as the directions associated with the vehicle body if not particularly described.

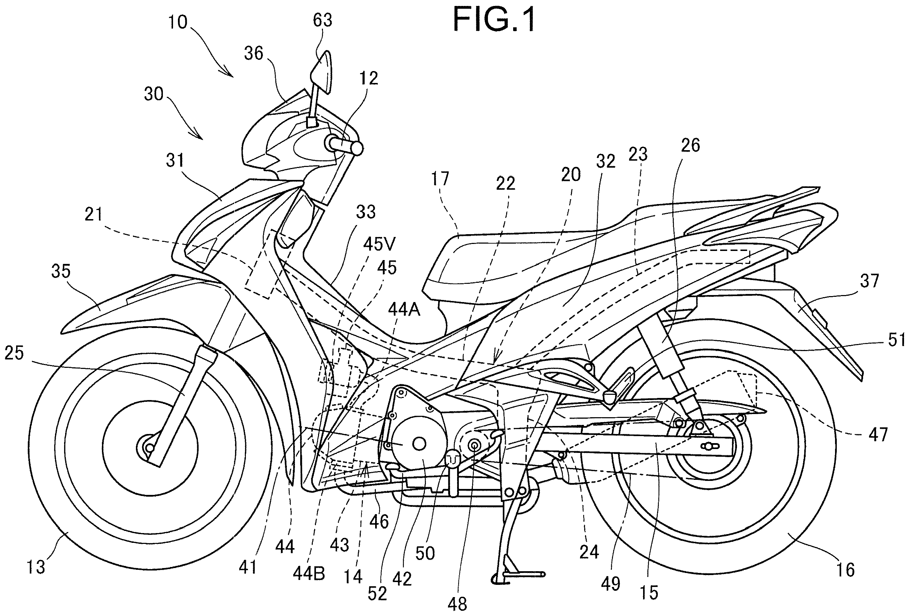

Fig. 1 is a left side view showing a motorcycle according to an embodiment of the present invention.

As shown in Fig. 1, a motorcycle 10 is a saddle-type vehicle that has a vehicle body frame 11, a front wheel 13 steered by a handle 12 which is freely steerably supported by the vehicle body frame 11, an engine (internal combustion engine) 14 supported by the vehicle body frame 11, a rear wheel 16 supported through a swing arm 15 by the vehicle body frame 11, and an occupant seat 17 disposed between the front wheel 13 and the rear wheel 16, and is driven while the occupant straddles the occupant seat 17.

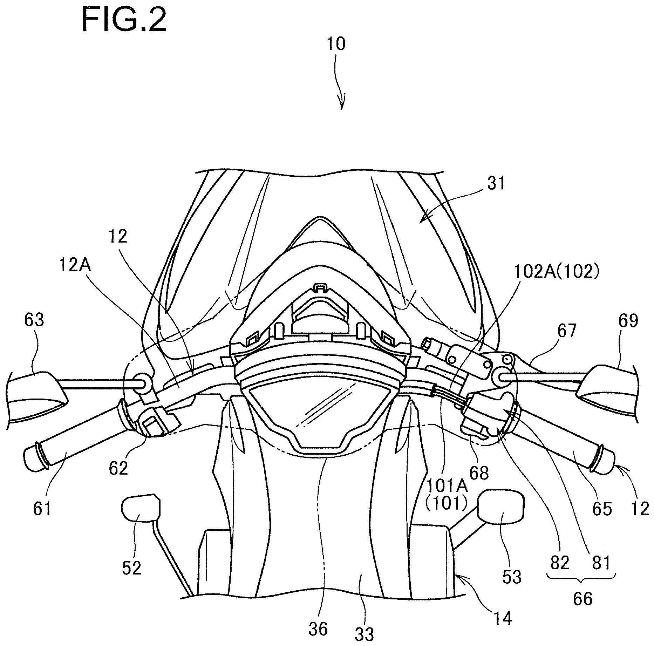

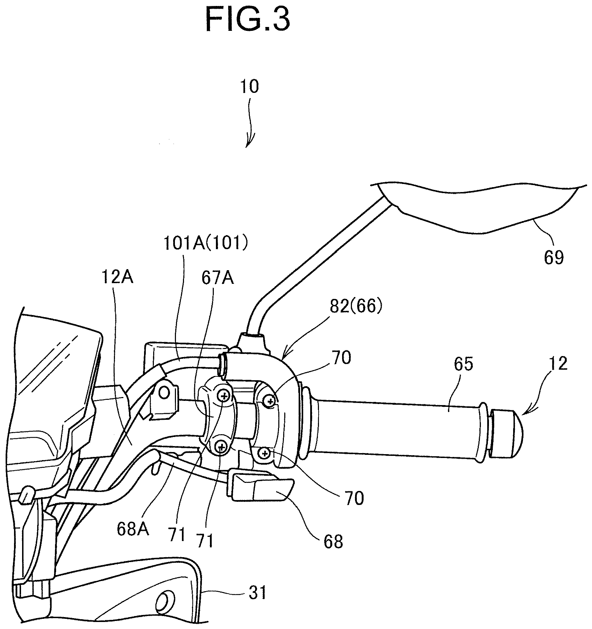

Fig. 2 is a view taken when the handle 12 is viewed together with a peripheral construction thereof from an upper side, and Fig. 3 is a view taken when the right end portion of the handle 12 is viewed together with the peripheral construction thereof from the rear side of the vehicle body.

As shown in Figs. 1 to 3, the vehicle body frame 11 has a head pipe 21 that supports a steering shaft (not shown) for supporting the handle 12 so that the steering shaft is freely rotatable, a main frame 22 extends rearward and downward from the head pipe 21, a seat rail 23 extending rearward and upward from the rear portion of the main frame 22, and a pair of right and left pivot plates 24 that extend downward from the rear portion of the main frame 22.

A pair of right and left front forks 25 are joined to the lower portion of the steering shaft, and the front wheel 13 is supported between the lower portions of both the front forks 25. The pair of right and left pivot plates 24 support the swing arm 15 so that the swing arm 15 are freely swingable in the up-and-down direction, and the rear wheel 16 is supported at the rear end portion of the swing arm 15. A rear cushion 26 is interposed between the swing arm 15 and the seat rail 23.

The motorcycle 10 is covered by a vehicle body cover 30 formed of resin. The vehicle body cover 30 has a front cover 31 that covers the front portion of the motorcycle 10, a pair of right and left side covers 32 that cover the side surface of the motorcycle 10, and a center cover 33 that covers the gap between the front cover 31 and the occupant seat 17.

The front cover 31 also functions as a leg shield that protrudes in the right-and-left direction and covers the front sides of both the occupant' s feet. The center cover 33 extends along the main frame 22 in the neighborhood of the main frame 22 to secure a saddle space which is downwardly recessed in side view of the vehicle body and located between the front cover 31 and the occupant' s seat 17, and covers the upper side of the engine 14.

A front fender 35 is disposed at the upper side of the front wheel 13, a handle cover 36 is disposed at the central portion in the vehicle width direction of the handle 12, and a rear fender 37 is disposed at the upper side of the rear wheel 16.

The engine 14 is supported by the main frame 22. The engine 14 is a single cylinder type horizontal engine whose cylinder axial line 41 extends substantially horizontally in the front-and-rear direction, and has a crankcase 42, a cylinder block 43 and a cylinder head 44 in this order from the rear side.

An air-intake port 44A is provided to the upper surface of the cylinder head 44, and an exhaust port 44B is provided to the lower surface of the cylinder head 44. A throttle body 45 is connected to the air-intake port 44A, and an air cleaner box (not shown) is connected to the upstream end of the throttle body 45.

The throttle body 45 has a throttle valve 45V for adjusting the amount of air to be supplied to the engine 14. The throttle valve 45V is linked to a throttle grip 65 (see Fig. 2 and Fig. 3) provided to the right end portion of the handle 12 through two throttle cables 101, 102 (see Fig. 2 and Fig. 3), and the opening degree of the throttle is made variable in accordance with the operation of the throttle grip 65 (throttle operation) . The throttle body 45 and the air cleaner box constitute an engine air-intake system.

An exhaust pipe 46 is connected to the exhaust port 44B of the cylinder head 44, and the exhaust pipe 46 passes through the lower side of the engine 14 and extends rearwards. An exhaust muffler 47 is connected to the rear end of the exhaust pipe 46. The exhaust pipe 46 and the exhaust muffler 47 constitutes an engine exhaust system. An output shaft 48 of the engine 14 projects from the left side surface of the engine 14, and the rotation of the output shaft 48 is transmitted to the rear wheel 16 through a chain transmission mechanism 49.

In Fig. 1, reference numeral 50 represents a step on which a driver (occupant) sitting at the front portion of the occupant seat 17 puts his/her foot, and reference numeral 51 represents a step on which an fellow passenger (occupant) sitting at the rear portion of the occupant seat 17 puts his/her foot. In Fig. 2, reference numeral 52 represents a shift pedal, and reference numeral 53 represents a brake pedal.

As shown in Fig. 2, the handle 12 is a bar handle manufactured by bending one cylindrical metal handle pipe 12A. A grip (also called as a handle grip) 61 (see Fig. 2) which is fixed to the handle pipe 12A and gripped by a driver' s (occupant's) left hand is mounted at the left end portion of the handle 12. A switch box 62 on which operators operated by the left hand are arranged, and a left-side back mirror 63 are mounted at the left-side portion of the handle pipe 12A.

As shown in Fig. 3, the throttle grip 65 which is assembled to the handle pipe 12A so as to be freely relatively rotatable, and the throttle housing 66 which is provided at the inside in the width direction of the throttle grip 65 are mounted at the right end portion of the handle 12.

The throttle housing 66 pinches the handle pipe 12A together with a part of the throttle grip 65 (a cable winding and hooking portion 65A described later), and supports the throttle cables 101, 102 extending from the throttle grip 65.

A brake lever operated by the right hand, a horn switch 68 and a right-side back mirror 69 are also mounted at the right-side portion of the handle pipe 12A. In Fig. 3, reference numeral 70 represents a fastening member (a pair of upper and lower fastening screws in this embodiment) for fixing the throttle housing 66 to the handle pipe 12A. Reference numeral 71 represents a fastening member (a pair of upper and lower fastening screws in this embodiment) for fixing the holder 67A of the brake lever 67 to the handle pipe 12A.

As shown in Fig. 2 and Fig. 3, the throttle cables 101, 102 are passed through the throttle housing 66 and drawn inwards in the vehicle width direction at the upper side of the handle 12. Thereafter, the throttle cables 101, 102 are routed inwards in the vehicle width direction along the upper surface of the handle pipe 12A, and then joined to the throttle valve 45V (see Fig. 1).

As described above, by routing the throttle cables 101, 102 at the upper side of the handle 12, rain water, etc. from the external drop down along the throttle cables 101, 102, and are difficult to infiltrate into the cable outers 101A, 102A. Furthermore, since the throttle cables 101, 102 are easily visually recognized from the external under the state that the handle cover 36 is detached, maintenance performance at the time when the throttle cables 101, 102 are attached/detached is enhanced.

As shown in Fig. 3, a wire 68A extending from the horn switch 68 is routed to the lower side of the handle 12, and it does not restrict handling of the throttle cables 101 102. In this motorcycle 10, the handle cover 36 covers the throttle housing 66, the throttle cables 101, 102 exposed to the outside of the throttle housing 66, the wire 68A, the holder 67A, etc., so that rain water, etc. from the outside can be effectively prevented from adhering to these elements. Accordingly, in this motorcycle 10, sealing for the throttle housing 66 is unnecessary.

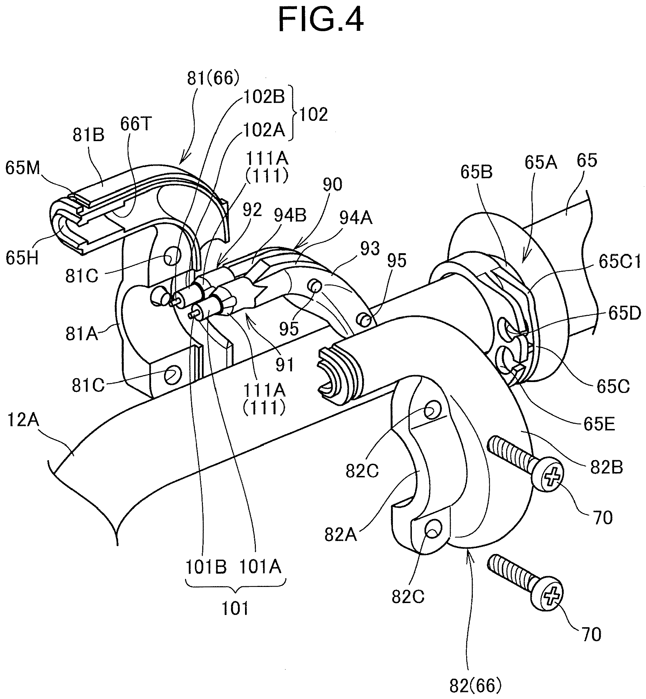

Fig. 4 is an exploded perspective view showing the throttle housing 66 together with the peripheral construction thereof. As shown in Fig. 4, the throttle housing 66 comprises housing half bodies 81, 82 which are split in the front-and-rear direction. The housing half bodies 81, 82 are mated with each other so as to sandwich the handle pipe 12A therebetween, and the pair of upper and lower fastening members 71 are fastened, whereby the housing half bodies 81, 82 are fixed to the handle pipe 12A.

More specifically, the throttle housing 66 has handle pipe pinching portions 81A, 82A that are formed in a concave shape and pinch the handle pipe 12A, and cable accommodating portions 81B, 82B for compartmenting an accommodation space in which the two throttle cables 101, 102 are accommodated, the handle pipe pinching portions 81A and 82A and the cable accommodating portions 81B, 82B being integrally formed with one another, and parts obtained by dividing these portions in half in the front-and-rear direction correspond to the housing half bodies 81, 82. The housing half body 81, 82 is integrally molded with resin material. Other materials than the resin material may be applied.

The handle pipe pinching portions 81A, 82A have pairs of upper and lower fastening portions 81C and through holes 82C for fastening the fastening members 70, and connect the housing half bodies 81, 82 in the neighborhood of the upper and lower sides of the handle pipe 12A.

The cable accommodating portions 81B, 82B pinch a slider 90 functioning as a guide member for the two throttle cables 101, 102, and also cover the cable winding and hooking portion 65A as a part of the throttle grip 65. Furthermore, the cable accommodating portions 81B, 82B have, at one ends (upper-side left end portions) thereof, cable openings 65H through which the throttle cables 101, 102 are passed.

The cable winding and hooking portion 65A functions as a towing portion which is joined to the tips of the two throttle cables 101 and 102 and tows the throttle cables 101, 102 in accordance with the manipulation of the throttle grip 65.

Specifically, the cable winding and hooking portion 65A is integrally provided to the base end portion of the grip pipe 65B which is integrated with the throttle grip 65, and the tips of the pair of throttle cables 101, 102 are hooked to the cable winding and hooking portion 65A. The grip pipe 65B is a part which is secured to the handle 12 so as to be freely relatively rotatable, and the cable winding and hooking portion 65A is rotated integrally with the throttle grip 65 in accordance with the turning operation of the throttle grip 65, whereby the throttle cables 101, 102 are taken up or fed out.

The two throttle cables 101, 102 are configured as push-pull cables in which core wires (also called as internal cables) 101B, 102B are freely movably inserted in cable outers (also called as outer cables) 101A, 102A.

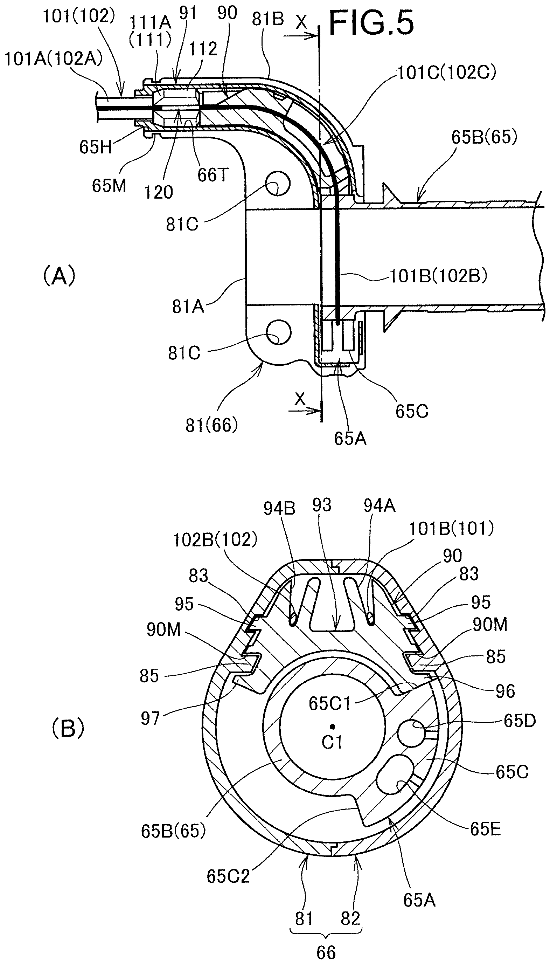

Fig. 5(A) is a diagram showing the internal construction of the throttle housing 66, and Fig. 5(B) is a X-X cross-sectional view of Fig. 5(A).

As shown in Figs. 5(A) and 5(B), the cable winding and hooking portion 65A has a protrusion portion 65C which protrudes radially from the base end portion of the grip pipe 65B and extends in fan-like fashion in the peripheral direction, and a pair of hook hole portions 65D, 65E which are spaced from each other are provided to the protrusion portion 65C.

As shown in Fig. 5(A), with respect to the two throttle cables 101, 102, the core wires 101B, 102B are drawn out from the cable outers 101A, 102A, and the core wires 101B, 102B which are drawn out as described above are supported by sliders 90.

The core wires 101B, 102B are guided by the sliders 90 so as to form bent portions 101C, 102C which are bent toward the cable winding and hooking portion 65A by substantially 90°C, whereby the core wires are guided to the cable winding and hooking portion 65A.

In this case, since the core wires 101B, 102B are more easily bent than the cable outers 101A, 102A, the core wires can be more greatly bent as compared with a case where the cable outers 101A, 102A are bent, and thus they can be made compact. Accordingly, the throttle housing 66 can be designed to be compact as a whole, and it can be disposed in a limited space inside the handle cover 36.

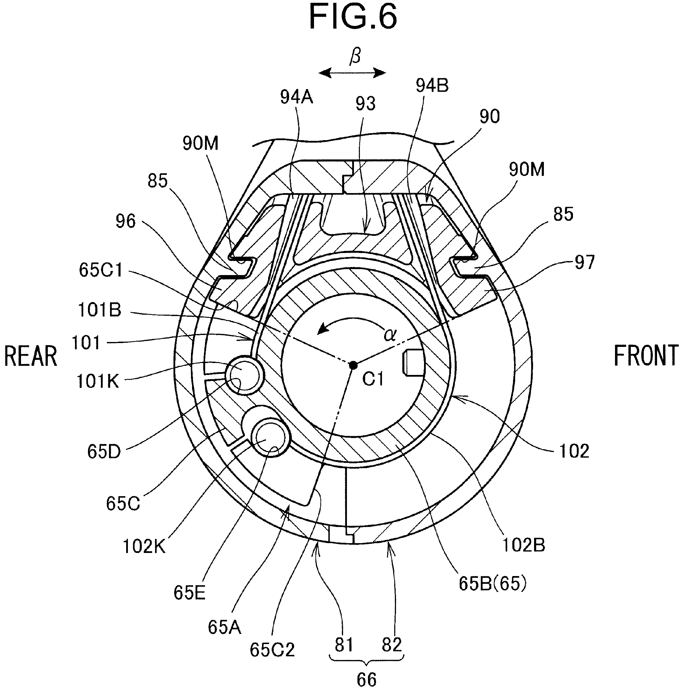

Fig. 6 is a side cross-sectional view showing the cable winding and hooking portion 65A together with the core wires 101B, 102B.

As shown in Fig. 6, the core wire 101B of one (rear-side) throttle cable 101 passes behind the throttle grip 65, and a barrel (drum) 101K provided to the tip of the core wire 101B is hooked to the hook hole portion 65D. Therefore, when the throttle grip 65 is turned to a throttle opening side (a direction represented by an arrow α in Fig. 6), the core wire 101B of the throttle cable 101 is towed, and the throttle valve 45V connected to the other end of the core wire 101B is actuated to an open side. That is, the throttle cable 101 functions as an open-side cable for actuating the throttle valve 45V to the open side.

Furthermore, as shown in Fig. 6, the core wire 102B of the other (rear-side) throttle cable 102 passes in front of the throttle grip 65, and a barrel 102K provided to the tip of the core wire 102B is hooked to the hook hole portion 65E. Therefore, when the throttle grip 65 is turned to a throttle close side (an opposite direction to that of the arrow α in Fig. 6), the core wire 102B of the throttle cable 102 is towed, and the throttle valve 45V connected to the other end of the core wire 102B is actuated to a close side. That is, the throttle cable 102 functions as a close-side cable for actuating the throttle grip 65 to the close side.

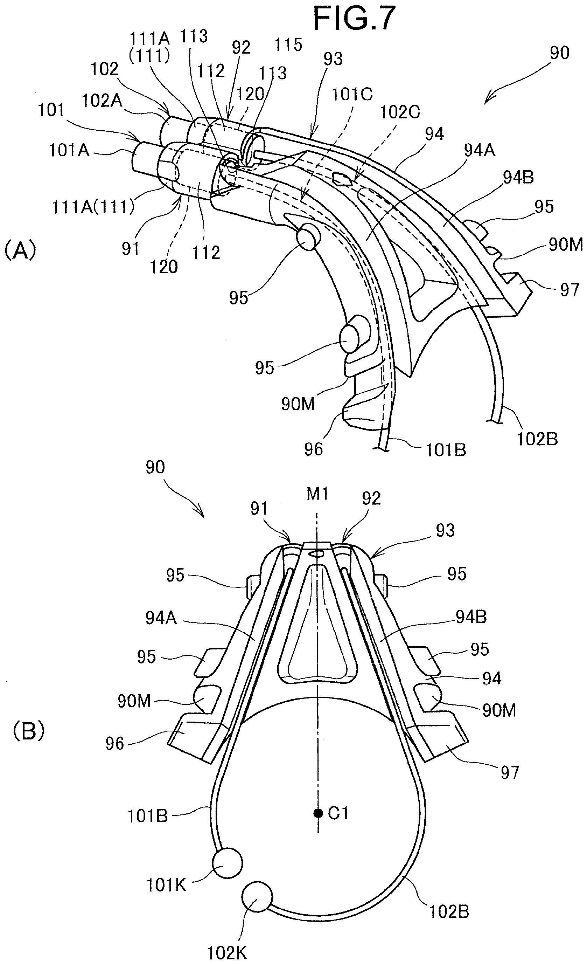

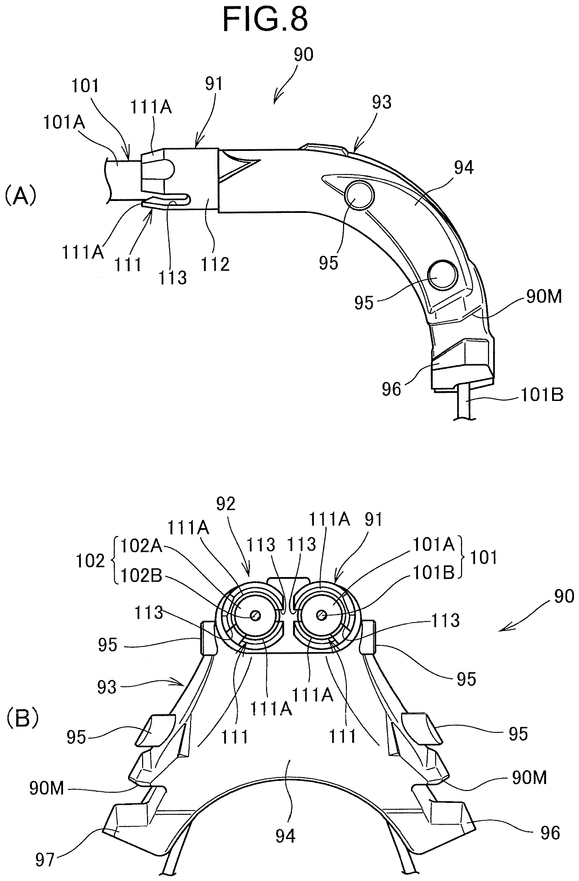

Fig. 7(A) is a perspective view showing the slider 90, and Fig. 7(B) is a view taken when the slider 90 is viewed from the outside in the vehicle width direction. Fig. 8(A) is a view taken when the slider 90 is viewed from the back side of the vehicle body, and Fig. 8(B) is a view taken when the slider 90 is viewed from the inside in the vehicle width direction.

The slider 90 has cable holders 91, 92 for holding the cable outers 101A, 102A of the two throttle cables 101, 102, and a core wire guide portion 93 for guiding the core wires 101B, 102B drawn out from the cable outers 101A, 102A so as to form the bent portions 101C, 102C.

The slider 90 is integrally molded with resin material while containing the cable holders 91, 92. Other materials than the resin material may be applied.

The core wire guide portion 93 integrally has a guide main body 94 which extends in a curved shape and spreads out in a fan-shape from the cable holders 91, 92 toward the cable winding and hooking portion 65A, plural (four in this construction) fitting projecting portions 95 which are formed to be spaced from one another on both the side surfaces of the guide main body 94 in the longitudinal direction of the guide main body 94, and a pair of foot portions 96, 97 provided to an end portion of the guide main body 94 which is located at the side of the cable winding and hooking portion 65A.

The core wire guide portion 93 is formed in a symmetrical shape with respect to the center face M1 (corresponding to the split face of the throttle housing 66) shown in Fig. 7(B).

The guide main body 94 has a pair of concaved grooves (guide grooves) 94A, 94B which extend along the curved shape of the guide main body 94 and is longer in distance therebetween as they approaches to the cable winding and hooking portion 65A, and the core wires 101B, 102B are guided by the concaved grooves 94A, 94B, respectively.

The concaved grooves 94A, 94B are formed as V-shaped grooves which are opened upwards and narrower in groove width toward as approaching to the lower side (see Fig. 5(B)). Therefore, the core wires 101B, 102B can be easily detached upwards from the recess grooves 94A, 94B, and also the core wires can be properly guided while suppressing the displacement (the displacement in the groove width direction) of the core wires 101B, 102B in the concaved grooves 94A, 94B.

Since the pair of core wires 101B, 102B are guided by the guide main body 94, as shown in Fig. 7(B), the core wires can be easily routed from the guide main body 94 along the turning direction of the throttle grip 65, and easily wound around and hooked to the cable winding and hooking portion 65A.

The pair of foot portions 96, 97 of the guide main body 94 are provided to the outside of the pair of concave grooves 94A, 94B. The pair of these foot portions 96, 97 function as stopper receiving portions against which the cable winding and hooking portion 65A abuts when the throttle grip 65 is rotated to an initial position or a full-throttle position. A specific description will be described hereunder.

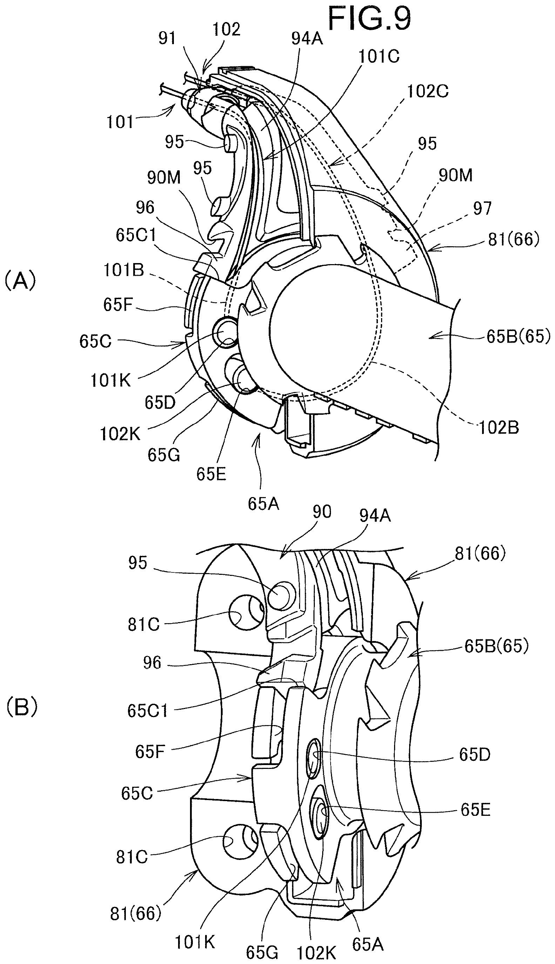

Fig. 9(A) is a perspective view showing the state that the core wire guide portion 93 and the cable winding and hooking portion 65A are assembled with each other, and Fig. 9(B) is a partially enlarged view of Fig. 9 (A) . As shown in these figures, the pair of foot portions 96, 97 of the guide main body 94 are located at the outer peripheral side of the base end portion of the grip pipe 65B, and face a movement passage of the cable winding and hooking portion 65A.

Fig. 9(A) and Fig. 9(B) show a state that a return torque is applied to the throttle grip 65 to forcedly further rotate the throttle grip 65 from a normal throttle full-close position. When the throttle grip 65 is forcedly rotated, one-side endportion 65C1 of the protrusion portion 65C as one end in the peripheral direction of the cable winding and hooking portion 65A comes into contact with one foot portion 96 of the slider 90, whereby the cable winding and hooking portion 65A and the throttle grip 65 are restricted from further rotating to the closing side. The normal throttle full-close position corresponds to a stop position of the throttle grip 65 when the throttle valve 45V is fully closed and thus further rotation thereof is restricted.

On the other hand, when the throttle grip 65 is further forcedly rotated from a normal throttle full-open position, the other-side end portion 65C2 (see Fig. 6) of the protrusion portion 65C at the other end in the peripheral direction of the cable winding and hooking portion 65A comes into contact with the other foot portion 97 of the slider 90, whereby the cable winding and hooking portion 65A and the throttle grip 65 are restricted from further rotating to the opening side. The normal throttle full-open position corresponds to a stop position of the throttle grip 65 when the throttle valve 45V is fully opened and further rotation thereof is restricted.

That is, one-side end portion 65C1 of the protrusion portion 65C and the one foot portion 96 of the slider 90 function as a stopper portion having a face at the throttle closing rotation side and a stopper receiving portion, and when an over-torque is applied to the closing side of the throttle grip 65, the rotation range at the closing side of the throttle grip 65 can be restricted.

Furthermore, the other-side end portion 65C2 of the protrusion portion 65C and the other foot portion 97 of the slider 90 function as a stopper having a face at the throttle opening rotation side and a stopper receiving portion, and when an over-torque is applied to the opening side of the throttle grip 65, the rotation range at the opening side of the throttle grip 65 can be restricted.

As shown in Fig. 6, the contact faces of the stopper portion and the stopper receiving portion are formed on a plane along a plane extending radially from the rotational center C1 of the throttle grip 65. Therefore, each contact face is perpendicular to the rotation direction of the throttle grip 65, and a load can be received by the whole face. Accordingly, the rigidity of the contact face can be efficiently secured, and it is unnecessary to provide any special part for enhancing the rigidity, so that the weight can be reduced and excellent operability can be performed.

Here, since the throttle housing 66 is split into two parts in the front-and-rear direction, the split direction of the housing half bodies 81, 82 corresponds to the front-and-rear direction (the direction represented by an arrow β in Fig. 6). If the above stopper receiving portion is molded integrally with the housing half bodies 81, 82, undercut would occur, and thus the molding process would be complicated, which is disadvantageous to reduction of the cost. In this construction, the stopper receiving portion is not formed integrally with the housing half bodies 81, 82, and thus no undercut occurs. This construction is advantageous to reduction of the cost.

In Fig. 9(A) and 9(B), reference numerals 65F, 65G represent cut-out grooves which are provided to the outer peripheral surface of the protrusion portion 65C of the cable winding and hooking portion 65A and through which the respective core wires 101B, 102B are passed and guided to the pair of hook hole portions 65D, 65E, respectively.

As described above, the respective core wires 101B, 102B extending from the slider 90 are inserted into the cut-out grooves 65F, 65G which are opened to the outer peripheral surface of the protrusion portion 65C, so that the respective core wires 101B, 102B can easily visually recognized from exterior appearance and can be easily attached and detached.

Next, the fitting projecting portions 95 of the slider 90 and the peripheral construction thereof will be described.

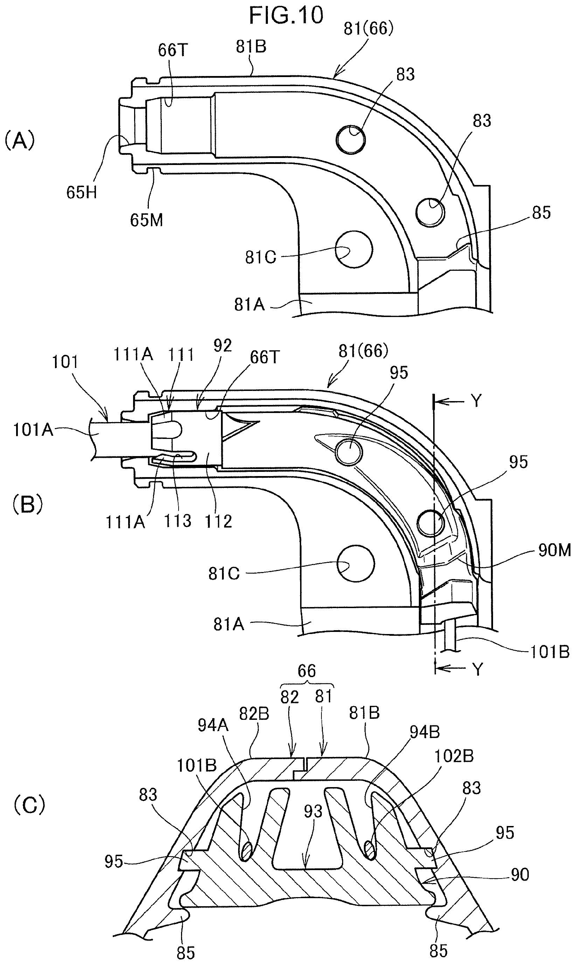

Fig. 10(A) is a diagram showing the housing half body 81 of the throttle housing 66 which pinches the slider 90, Fig. 10(B) is a diagram showing that the slider 90 is arranged in the housing half body 81, and Fig. 10(C) is a Y-Y cross-sectional view of Fig. 10(B).

The housing half body 81 has fitted recess portions 83 in which the respective fitting projecting portions 95 of the slider 90 are fitted. The housing half body 82 which is not shown in Fig. 10 has also fitted recess portions 83 (see Fig. 10(C)) in which the respective fitting projecting portions 95 of the slider 90 are fitted.

As described above, a plurality of (four) fitting projecting portions 95 of the slider 90 are fit tedto the respective fitted recess portions 83 provided to the housing half bodies 81, 82, and thus the slider 90 and the throttle housing 66 can be positioned at these fitted four places. That is, a positioning and fitting portion for positioning the slider 90 and the throttle housing 66 is formed by the fitting projecting portion 95 of the slider 90 and the fitted recess portion 83 of the throttle housing 66.

The core wire guide portion 93 of the slider 90 is formed so that the outer shape thereof is slightly smaller than the inner shape of the throttle housing 66 (corresponding to the inner shapes of the cable accommodating portions 81B, 82B). Therefore, the core wire guide portion 93 and the throttle housing 66 are spaced from each other at positions other than the positioning and fitting portions (the fitting projecting portions 95, the fitted recess portions 83), and the slider 90 and the throttle housing 66 are separated from each other around the positioning and fitting portions (the fitting projecting portions 95, the fitted recess portions 83) as shown in Fig. 10(C).

That is, in this construction, the positioning between the slider 90 and the throttle housing 66 is basically performed at the plural positioning and fitting portions (the fitting projecting portions 95, the fitted recess portions 83), and under a non-operation state of the throttle grip 65, the slider 90 and the throttle housing 66 are spaced from each other at the positions other than the positioning and fitting portions.

The slider 90 and the throttle housing 66 are spaced from each other as described above. Therefore, when the throttle grip 65 is operated by strong operating force and a load of a predetermined value or more is imposed on the foot portions 96, 97 of the slider 90, the slider 90 is deformed from the foot portion 96, 97 side which receives the load and abuts against the throttle housing 66. Therefore, when the load of the predetermined value or more is applied, the whole throttle housing 66 is slightly deformed, whereby the load from the slider 90 can be received.

According to this construction, the place at which the load is transmitted to the throttle housing 66 becomes clear, so that the rigidity of the throttle housing 66 can be easily optimized, the weight of the throttle housing 66 can be reduced and the throttle housing 66 can be made difficult to be opened.

Furthermore, since the slider 90 is deformed from the foot portion 96, 97 side, the load is transmitted to the lower portion of the throttle housing 66. In this construction, the lower portion of the throttle housing 66 is near to the handle pipe pinching portions 81A, 82A, so that the rigidity is relatively high, and the deformation of the throttle housing 66 can be easily suppressed.

Furthermore, as shown in Fig. 6, the housing half bodies 81, 82 integrally have a pair of ribs 85 which are fitted in a pair of slider grooves 90M formed between the foot portions 96, 97 of the slider 90 and the fitting projecting portions 95. These pair of ribs 85 are fitted to the slider grooves 90M, whereby the operating force of the throttle grip which acts on the foot portions 96, 97 can be also received by the throttle housing 66.

As described above, in this construction, the slider 90 is deformed from the foot portion 96, 97 side which receives the load, and thus the load is transmitted from the foot portions 96, 97 to the pair of ribs 85 provided to the throttle housing 66. Therefore, the ribs 85 enables the load to be received at a place whereby the strength is locally high, and the rigidity of the throttle housing 66 can be properly secured.

Subsequently, the cable holders 91, 92 of the slider 90 will be described.

The cable holders 91, 92 have the same structure. Therefore, the cable holder 92 will be described hereunder, and the duplicative description of the cable holder 91 will be omitted.

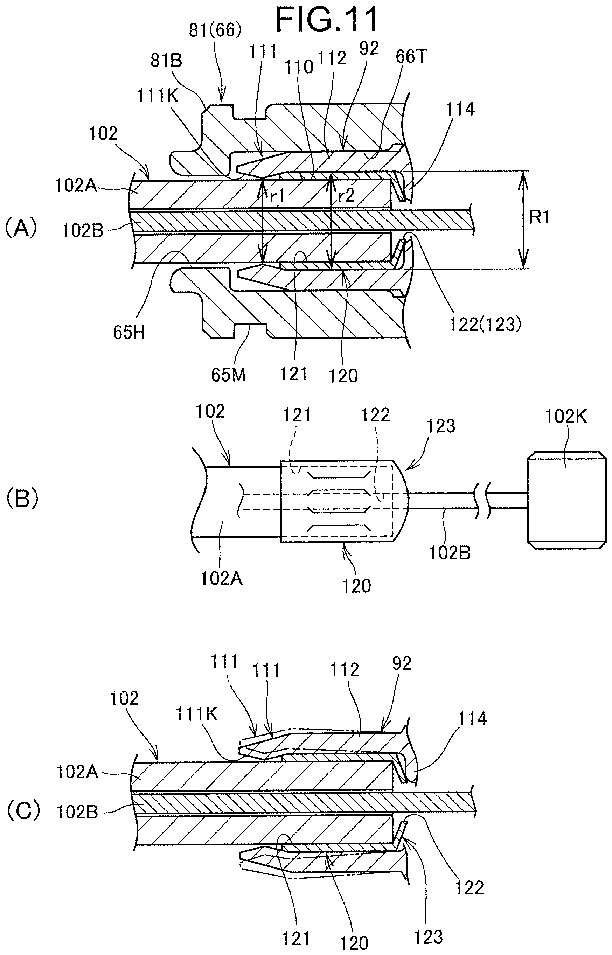

Fig. 11(A) is a diagram showing the cross-sectional structure of the cable holder 92 together with the throttle housing 66, Fig. 11(B) is a diagram showing the structure of the end portion of the cable outer 102A, and Fig. 11(C) is a diagram showing the operation of the cable holder 92.

As shown in Fig. 11(A), the cable holder 92 is formed in a cylindrical shape having a fitting hole portion 110 in which the end portion of the cable outer 102A is inserted. The insertion-side end portion 111 of the fitting hole portion 110 is formed to have a hole diameter (value r1) smaller than the outer shape (value R1) of the end cap 120 mounted at the end portion of the cable outer 102A (R1>r1).

More specifically, the cable holder 92 integrally has a cylinder main body 112 which cylindrically extends from the core wire guide portion 93 of the slider 90 along the longitudinal direction of the cable outer 102A while the inner diameter thereof is kept constant (value r2), a cylindrical insertion-side end portion 111 having a slope face 111K which gradually decreases in diameter from the tip of the cylinder main body 112 to the hole diameter (value r1) and then increases in diameter toward the tip, and a flange portion 114 which extends to the inner peripheral side at the base end of the cylinder main body 112 and restricts further insertion of the end cap 120.

Furthermore, slits 113 (see Fig. 8(B)) which traverse at least the insertion-side end portion 111 and extend in the longitudinal direction of the cable outer 102A are formed in the cable holder 92. By providing the slits 113, the insertion-side end portion 111 is divided in the peripheral direction, and each divided pieces 111A are easily elastically deformed in the radial direction of the cable outer 102A.

Therefore, when the cable outer 102A on which the end cap 120 is mounted is inserted into or pulled out from the cable holder 92, the respective divided pieces 111A spread out by the outer diameter of the end cap 120 or more, and thus the cable outer 102A can be easily inserted and pulled out. That is, the insertion-side end portions 111 (divided pieces 111A) function as a deforming portion which spreads in the radial direction when the end portion of the cable outer 101A is pulled out.

In this embodiment, as shown in Fig. 8(B), plural (two) slits 113 are provided to be spaced from each other in the peripheral direction, and these slits 113 are configured to extend to the cylinder main body 112, whereby the respective pieces 111A are formed to more easily spread out in the radial direction.

Furthermore, as shown in Fig. 8(B), these slits 113 are provided in a direction different from that of the concavedgrooves (guide grooves) 94A, 94B of the slider 90. More specifically, the slits 113 are provided at the other adjacent cable holder 91 side and at the obliquely lower side.

One of these slits (the slit at the other adjacent cable holder 91 side) 113 traverses the whole cable holder 92, and intercommunicates with the concaved groove 94B through an intercommunication opening portion 115 (see Fig. 7(A)) provided between the cable holder 92 and the concaved groove 94B.

As described above, the slit 113 of the cable holder 92 and the concaved groove 94B intercommunicate with each other, so that the core wire 102B drawn out from the cable outer 102A can be easily inserted/taken out into/from the slit 113 and the concaved groove 94B.

Furthermore, since the slit 113 and the concaved groove 94B which intercommunicate with each other are opened in the different directions, the core wire 102B can be made difficult to slip out, and easily sub-assembled. In addition, even when rain water infiltrates from the cable holder 92 side, the rain water is difficult to flow to the concaved groove 94B.

As is obvious from Fig. 7(A), the intercommunication opening portion 115 enables not only the intercommunication between the cable holder 92 and the concaved groove 94B, but also the intercommunication between the cable holder 91 and the concaved groove 94B. Therefore, the core wire 101B drawn out from the cable outer 102A can be easily inserted and taken out into/from the slit 113 and the concaved groove 94A.

As shown in Fig. 11(B), the end cap 120 is a cylindrical part to be covered on the end portion of the cable outer 102A. One end of the end cap 120 is formed in a large-diameter opening portion 121 in which the end portion of the cable outer 102A is put while the other end of the end cap 120 is formed at a block end portion 123 which blocks the end portion of the cable outer 102A while leave open a small-diameter opening portion 122 through which the core wire 102B is passed.

The end cap 102 is formed of metal material. The end cap 102 is covered on the end portion of the cable outer 102A and then compressed by a compressing tool, whereby the end cap 102 is fixed to the cable outer 102Aby so-called crimping. The fixing is not limited to crimping, but it may be fitting or frictional engagement. Not only the metal material, but also other materials may be used.

As shown in Fig. 11(A), in the throttle housing 66, a portion which covers the cable holder 92 of the slider 90 is formed as a contact portion 66T which comes into contact with the outer peripheral surface of the cable holder 92.

Therefore, when the slider 90 is mounted in the throttle housing 66, the contact portion 66T comes into contact with the outer peripheral surface of the cable holder 92 to restrict the spread in the radial direction of the insertion-side end portion 111 of the cable holder 92. Accordingly, the end cap 120 does not slip out from the cable holder 92, and thus the movement in the longitudinal direction of the cable outer 102A can be restricted.

On the other hand, when the throttle housing 66 is detached, the spread in the radial direction of the cable holder 92 is not restricted, so that the cable outer 102A can be pulled out together with the end cap 120. That is, by pulling the cable outer 102A in the pull-out direction, the insertion-side end portion 111 of the cable holder 92 is pushed and spread out in the radial direction by the end cap 120, and can be easily pulled out from the cable holder 92.

According to the above construction, when the throttle cable 102 is mounted, the end cap 120 is first mounted on the end portion of the cable outer 102A, and the end portion of the cable outer 102A is inserted into the fitting hole portion 110 of the cable holder 92 of the slider 90 together with the end cap 120. With respect to the core wire 102B, it may be pulled out from the cable outer 102A in advance, and routed in the concave groove 94B of the slider 90.

In this case, the slope surface 111K which increases in diameter to the tip thereof is provided to the tip of the insertion-side end portion 111 of the cable holder 92. Therefore, the insertion-side end portion 111 easily spreads out in the radial direction in accordance with the insertion of the cable outer 102A, and thus the cable outer 102A can be easily inserted.

As the end portion of the cable outer 102A is inserted, the end cap 120 comes into contact with the flange portion 114 provided at the deep position of the fitting hole portion 110, and thus further insertion of the end cap 120 can be restricted. This restricted position is set to a position at which the end cap 120 has passed over the insertion-side end portion 111 of the cable holder 92. Therefore, the insertion-side end portion 111 of the cable holder 92 is closed, and the cable outer 102A is hardly pulled out together with the end cap 120. Accordingly, the cable outer 102A can be temporarily fixed to the slider 90.

Subsequently, the barrel 102K provided to the tip of the core wire 102B is secured to the cable winding and hooking portion 65A. Thereafter, the slider 90 is pinched by the throttle housing 66. Accordingly, as shown in Fig. 11(A), the cable holder 92 of the slider 90 is pinched by the throttle housing 66, and the throttle cable 102 does not slip out from the slider 90, so that the movement in the longitudinal direction of the throttle cable 102 can be restricted. Through the above process, the mounting of the throttle cable 102 is completed.

The same manner is applied to the mounting of the throttle cable 101.

When the throttle cable 102 is detached, the cable outer 102A can be easily detached from the cable holder 92 by detaching the throttle housing 66 and merely pulling out the cable outer 102A because the spread in the radial direction of the cable holder 92 is not restricted.

Thereafter, the core wire 102B drawn out from the cable outer 102A is detached from the slider 90 and the cable winding and hooking portion 65A, whereby the throttle cable 102 is detached. Accordingly, the detachment of the throttle cable 102 is completed. The detachment of the throttle cable 101 is also performed in the same way.

As described above, this embodiment is provided with the slider 90 which is pinched by the throttle housing 66 which is configured to be split and guides the bent portions 101C, 102C of the core wires 101B, 102B drawn out from the cable outers 101A, 102A, and the cable holders 91, 92 which are provided to the slider 90 to restrict the movement in the longitudinal direction of the throttle cables 101, 102 and configured so that the respective cables 101, 102 are separable from the slider 90 as shown in Fig. 4. Therefore, as compared with the case where the cable outers 101A, 102A are bent, the degree of freedom of routing the throttle cables 101, 102 can be enhanced, and the throttle cables 101, 102 can be easily separated, so that maintenance works of exchanging cables, supply oil, etc. can be easily performed. Furthermore, the two throttle cables 101, 102 can be exchanged one by one, and the cost associated with the maintenance can be reduced.

The cable holders 91, 92 has the insertion-side end portion 111 which holds the end portions of the cable outers 101A, 102A and functions as a deforming portion which spreads in the radial direction of the cable outers 101A, 102A when the end portions of the cable outers 101A, 102A are pulled out, and the throttle housing 66 pinches the insertion-side end portion 111 and restricts the spread in the radial direction of the insertion-side end portion 111, so that the cable outers 101A, 102A can be efficiently prevented from slipping out by using the pinching force of the throttle housing 66. Furthermore, by detaching the throttle housing 66, the cable outers 101A, 102A can be easily detached.

In addition, as shown in Figs. 11(A) to 11(C), the end cap 120 which is larger in outer diameter than that of the cable outers 101A, 102A is provided to the end portions of the cable outers 101A, 102A, and the cable holders 91, 92 have the fitting hole portion 110 in which the cable outer 101A, 102A is inserted together with the end cap 120. The insertion-side end portion 111 of the fitting hole portion 110 is formed to be smaller in hole diameter than the outer diameter of the end cap 120, and provided with the slits 113 along the longitudinal direction of the cable so that the diameter thereof can increase, and the throttle housing 66 pinches the fitting hole portion 110 to restrict the spread in the radial direction of the cable holder 91, 92, so that holding of the cable outers 101A, 102A and easiness of the assembling work thereof can be performed, and the cost can be reduced.

As shown in Fig. 6, the throttle grip 65 is provided with the one-side end portion 65C1 and the other-side end portion 65C2 of the protrusion portion 65C functioning as the stopper portion having the faces in the grip rotation direction, and the slider 90 is provided with the pair of foot portions 96, 97 functioning as the stopper receiving portions against which the respective stoppers abut to restrict the rotational range of the throttle grip 65. Therefore, the load occurring through the contact can be received by the whole throttle housing 66 through the slider 90. Accordingly, the rigidity of the throttle housing 66 can be optimized, and the weight of the throttle housing 66 can be reduced.

In addition, the contact faces of the stopper portion and the stopper receiving portion are formed along the plane extending from the rotational center C1 of the throttle grip 65 in the radial direction, so that the load can be received by the whole contact face, the rigidity of the contact face can be optimized, the weight can be reduced, and excellent workability can be implemented.

Furthermore, as shown in Figs. 10(A) to 10(C), there are provided the fitting projection portions 95 and the fitted recess portions 83 which function as the positioning and fitting portions for positioning the slider 90 and the throttle housing 66 at the plural places, and the slider 90 and the throttle housing 66 are spaced from each other at the positions other than the positioning and fitting portions (the fitting projecting portions 95, the fitted recess portions 83) under the non-operation state of the throttle grip 65. Therefore, the load transmitted from the slider 90 to the throttle housing 66 can be properly controlled, the rigidity of the throttle housing 66 can be optimized, and the weight of the throttle housing 66 can be reduced.

In this construction, as shown in Figs. 7(A) and 8(B), etc., the slider 90 has the concaved grooves (guide grooves) 94A, 94B that guide the core wires 101B, 102B and are opened at one sides thereof, and at least one of the slits 113 provided to the slider 90 intercommunicates with the concave groove 94A, 94B, and thus the core wires 101B, 102B can be easily inserted and taken out.

Furthermore, the concave grooves 94A, 94B and the slit 113 which intercommunicate with each other are opened in different directions, so that the core wires 101B, 102B can be made difficult to slip out from the concave groove and the slit, and they can be easily sub-assembled. In addition, even when rain water infiltrates into the slit 113 side, the rain water is difficult to flow into the concave grooves 94A, 94B.

The embodiment described above shows an example of the present invention, and any modification and application may be made without departing from the subject matter of the present invention.

For example, in the above embodiment, the present invention is applied to the motorcycle 10 in which the throttle cables 101, 102 are routed at the upper side of the handle 12. However, the present invention is not limited to this style, and the present invention may be broadly applied to a motorcycle 10 in which the throttle cables 101, 102 are routed at the lower side of the handle 12, a motorcycle in which the throttle housing 66 is not covered by the handle cover 36 or the like.

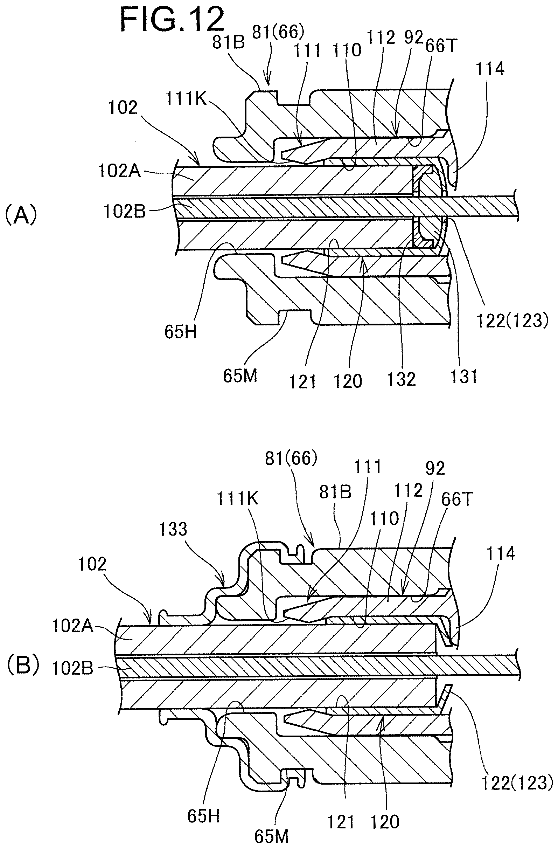

In the case where the throttle cables 101, 102 are routed at the lower side of the handle 12, when rain water infiltrates into the throttle housing 66, there is a risk that the rain water passes along the core wires 101B, 102B of the throttle cables 101, 102 and infiltrates into the cable outers 101A, 102A. In order to avoid this risk, as shown in an example of Fig. 12(A), it is preferable to provide a waterproof seal 131 for blocking the gap between the cable outer 102A and the core wire 102B. According to this construction, infiltration of rain water, etc. into the core wire 102B can be suppressed, and durability can be enhanced.

More specifically, in Fig. 12(A), a seal case 132 which is in contact with the end face of the cable outer 102A may be provided in the end cap 120, and a waterproof seal 131 for blocking the gap between the core wire 102B and the cable outer 102A may be provided between the seal case 132 and the flange portion 114 of the end cap 120. By providing the seal case 132, the waterproof seal 131 can be prevented from being damaged when the cables are mounted, and sealing performance can be easily maintained while suppressing local deformation of the waterproof seal 131.

In the case of a vehicle used under an environment containing a lot of dust or an off-road vehicle running on uneven grounds, it is preferable to mount a seal member 133 for blocking the gap between the cable opening 65H of the throttle housing 66 and the throttle cable 101, 102 as shown in Fig. 12 (B). According to this construction, infiltration of rain water, dust or the like into the throttle housing 66 can be suppressed, and the durability can be enhanced.

More specifically, the throttle housing 66 of this construction has a groove portion 65M on the outer peripheral portion of the cable opening 65H in which the throttle cable 101, 102 is inserted, and the boot-like seal member 133 may be secured by hooking the end portion of the seal member 133 to the groove portion 65M.

A material having elasticity such as rubber or the like is used for the seal member 133, so that the seal member 133 can be easily mounted. Furthermore, the seal member 133 is hooked to the groove portion 65M when mounted, so that it is hardly detached. In addition, the waterproof seal 131 may be provide.

Furthermore, in the above embodiment, the present invention is applied to the motorcycle 10 having the two throttle cables 101, 102. However, the present invention is applicable to a motorcycle having one throttle cable.

Still furthermore, the present invention is applicable to not only the operation unit structure for the motorcycle 10, but also an operation unit structure for a saddle-type vehicle other than the motorcycle. The saddle-type vehicle contains the whole types of vehicles which drivers drive while straddling the vehicle bodies, and contains not only motorcycles (containing motor-assisted bicycles), but also tricycles and four-wheeled vehicles which are classified to ATV (All-Terrain Vehicle).

In short, the present invention is broadly applicable to an operation unit structure for a vehicle having one or plural throttle cables for operating the throttle valve 45V in accordance with the operation of the throttle grip 65, and the throttle housing 66 which holds the throttle cables.

### DESCRIPTION OF REFERENCE NUMERALS

10 Motorcycle (saddle-type vehicle)
12A front wheel
14 engine (internal combustion engine)
45V throttle valve
65 throttle grip
65C protrusion portion
65C1 one-side terminal (stopper portion)
65C2 other-side terminal (stopper portion)
66 throttle housing
83 fitted recess portion (positioning fitting portion)
90 slider
91, 92 cable holder
95 fitting projection portion (positioning fitting portion)
96, 97 foot portion (stopper receiving portion)
101, 102 throttle cable
101A, 102A cable outer
101B, 102B core wire
101C, 102C bent portion
110 fitting hole portion
111 insertion-side end portion (deforming portion)
120 end cap
131 waterproof seal
133 seal member
C1 rotational center

## Claims

1. An operation unit structure for a saddle-type vehicle comprising:
a throttle grip (65) that is relatively rotatably assembled to a handle pipe (12A);
a throttle valve (45V) for adjusting the amount of air to be supplied to an internal combustion engine (14);
a throttle cable (101, 102) that has a core wire (101B, 102B) and a cable outer (101A, 102A) covering the core wire (101B, 102B), one-side end portion of the core wire (101B, 102B) being fixed to the throttle grip (65) while the other-side end portion of the core wire is fixed to the throttle valve (45V), and actuates the throttle valve (45V) by pulling the core wire (101B, 102B) in accordance with an operation of the throttle grip (65);
a throttle housing (66) that holds the throttle cable (101, 102), the throttle housing (66) is configured in a split structure to pinch a part of the throttle grip (65) and is fixed to the handle pipe (12A), and a slider (90) that is pinched by the throttle housing (66) and guides a bent portion (101C, 102C) of the core wire (101B, 102B) drawn out from the cable outer (101A, 102A), and a cable holder (91, 92) that is provided to the slider (90) and configured to restrict movement in a longitudinal direction of the throttle cable (101, 102) and make the throttle cable (101, 102) separable from the slider (90), are provided; **characterized in that** the throttle grip (65) is provided with a stopper portion (65C1, 65C2) having a face in a grip rotating direction; and
the slider (90) is provided with a stopper receiving portion (96, 97) with which the stopper portion (65C1, 65C2) is brought into contact to restrict a rotation range of the throttle grip (65).

2. The operation unit structure for a saddle-type vehicle according to claim 1, wherein contact faces of the stopper portion (65C1, 65C2) and the stopper receiving portion (96, 97) are formed along a plane extending in the radial direction from the rotational center (C1) of the throttle grip (65).

3. The operation unit structure for a saddle-type vehicle according to 1 or 2, wherein the throttle cable (101, 102) has an open-side cable (101) that actuates the throttle valve (45V) to an open side in accordance with an opening operation of the throttle grip (65), and a close-side cable (102) that actuates the throttle valve (45V) to a close side in accordance with a closing operation of the throttle grip (65), and the two cables (101, 102) are held by the cable holders (91, 92) of the slider (90).

4. The saddle-type vehicle according to any one of claims 1 to 3 , wherein the cable holder (91, 92) has a deforming portion (111) that holds the end portion of the cable outer (101A, 102A) and spreads out in a radial direction of the cable outer (101A, 102A) when the end portion of the cable outer (101A, 102A) is pulled out, and the throttle housing (66) pinches the deforming portion (111) to restrict spread-out in the radial direction of the deforming portion (111).

5. The operation unit structure for a saddle-type vehicle according to claim 4, wherein an end cap (120) having a larger outer diameter than the outer diameter of the cable outer (101A, 102A) is provided to the end portion of the cable outer (101A, 102A), the cable holder (91, 92) has a fitting hole portion (110) in which the cable outer (101A, 102A) is inserted together with the end cap (120), an insertion-side end portion (111) of the fitting hole portion (110) is configured to have a hole diameter smaller than the outer diameter of the end cap (120), and provided with a slit (113) along in the longitudinal direction of the cable so as to be increasable in diameter, and the throttle housing (66) pinches the fittingholeportion (110) torestrict spread in the radial direction of the cable holder (91, 92),

6. The operation unit structure for a saddle-type vehicle according to any one of claims 1 to 5, wherein a positioning and fitting portion (95, 83) for positioning the slider (90) and the throttle housing (66) at plural places is provided, and the slider (90) and the throttle housing (66) are separated from each other at positions other than the positioning and fitting portion (95, 83) under an non-operation state of the throttle grip (65).

7. The operation unit structure for a saddle-type vehicle according to claim 5, wherein the end cap (120) is provided with a waterproof seal (131) for blocking the gap between the cable outer (101A, 102A) and the core wire (101B, 102B).

8. The operation unit structure for a saddle-type vehicle according to any one of claims 1 to 7, wherein the throttle housing (66) has a cable opening (65H) in which the throttle cable (101, 102) is inserted, and is provided with a seal member (133) for blocking the gap between the cable opening (65H) and the throttle cable (101, 102).

## Patentansprüche

1. Struktur einer Betriebseinheit für ein Fahrzeug vom Satteltyp, umfassend:
einen Gasgriff (65), der relativ drehbar an einem Griffrohr (12A) montiert ist;
ein Drosselventil (45V) zum Anpassen der Menge von Luft, die einem Verbrennungsmotor (14) zuzuführen ist;
ein Drosselkabel (101, 102), das einen Kerndraht (101B, 102B) und ein Kabeläußeres (101A, 102A) aufweist, das den Kerndraht (1018,102B) abdeckt, wobei ein Endbereich einer Seite des Kerndrahts (101B, 102B) an dem Gasgriff (65) befestigt ist, während der Endbereich der anderen Seite des Kerndrahts an das Drosselventil (45V) befestigt ist, und das Drosselventil (45V) durch ziehen des Kerndrahts (101B, 102B) in Übereinstimmung mit einer Operation des Gasgriffs (65) betätigt;
ein Drosselgehäuse (66), das das Drosselkabel (101, 102) hält, wobei das Drosselgehäuse (66) in einer geteilten Struktur konfiguriert ist, um einen Teil des Gasgriffs (65) einzuklemmen, und an dem Griffrohr (12A) befestigt ist,
und wobei ein Schieber (90), der durch das Drosselgehäuse (66) eingeklemmt ist und einen gebogenen Bereich (101C, 102C) des Kerndrahts (101B, 102B) führt, der aus dem Kabeläußeren (101A, 102A) gezogen ist,
und ein Kabelhalter (91, 92), der an dem Schieber (90) vorgesehen ist und konfiguriert ist, um eine Bewegung in einer Längsrichtung des Drosselkabels (101, 102) zu beschränken, und das Drosselkabel trennbar von dem Schieber (90) zu machen, vorgesehen sind;
**dadurch gekennzeichnet, dass**
der Gasgriff (65) mit einem Stopperbereich (65C1, 65C2) vorgesehen ist, der eine Fläche in einer Griffrotationsrichtung aufweist; und
der Schieber (90) mit einem Stopperempfangsbereich (96, 97) vorgesehen ist, mit dem der Stopperbereich (65C1, 65C2) in Kontakt gebracht wird, um einen Rotationsbereich des Gasgriffs (65) zu beschränken.

2. Struktur der Betriebseinheit für ein Fahrzeug vom Satteltyp nach Anspruch 1, wobei Kontaktflächen des Stopperbereichs (65C1, 65C2) und der Stopperempfangsbereich (96, 97) entlang einer Ebene gebildet sind, die sich in der radialen Richtung von dem Rotationszentrum (C1) des Gasgriffs (65) erstreckt.

3. Struktur der Betriebseinheit für ein Fahrzeug vom Satteltyp nach Anspruch 1 oder 2, wobei das Drosselkabel (101, 102) ein offenseitiges Kabel (101), das das Drosselventil (45V) zu einer offenen Seite in Übereinstimmung mit einer Öffnungsoperation des Gasgriffs (65) betätigt, und ein geschlossenseitiges Kabel (102) aufweist, das das Drosselventil (45V) zu einer geschlossenen Seite in Übereinstimmung mit einer Verschlussoperation des Gasgriffs (65) betätigt, und wobei die zwei Kabel (101, 102) durch die Kabelhalter (91, 92) des Schiebers (90) gehalten werden.

4. Fahrzeug vom Satteltyp nach einem der Ansprüche 1 bis 3, wobei der Kabelhalter (91, 92) einen Deformationsbereich (111) aufweist, der den Endbereich des Kabeläußeren (101A, 102A) hält und sich in einer radialen Richtung des Kabeläußeren (101A, 102A) ausbreitet, wenn der Endbereich des Kabeläußeren (101A, 102A) herausgezogen wird, und wobei das Drosselgehäuse (66) den Deformationsbereich (111) einklemmt, um Ausbreiten in die radiale Richtung des Deformationsbereichs (111) zu beschränken.

5. Struktur der Betriebseinheit für ein Fahrzeug vom Satteltyp nach Anspruch 4, wobei eine Endkappe (120), die einen größeren Außendurchmesser hat als der Außendurchmesser des Kabeläußeren (101A, 102A), an dem Endbereich des Kabeläußeren (101A, 102A) vorgesehen ist, wobei der Kabelhalter (91, 92) einen Passlochbereich (110) aufweist, in dem das Kabeläußere (101A, 102A) zusammen mit der Endkappe (120) eingefügt ist, wobei ein einfügungsseitiger Endbereich (111) des Passlochbereichs (110) konfiguriert ist, um einen Lochdurchmesser kleiner als der Außendurchmesser der Endkappe (120) zu haben, und mit einem Schlitz (113) entlang der Längsrichtung des Kabels vorgesehen ist, um im Durchmesser vergrtißerungsfähig zu sein, und wobei das Drosselgehäuse (66) den Passlochbereich (110) einklemmt, um Ausbreiten in die radiale Richtung des Kabelhalters (91, 92) zu beschränken.

6. Struktur der Betriebseinheit für ein Fahrzeug vom Satteltyp nach einem der Ansprüche 1 bis 5, wobei ein Positionierungs- und Passungsbereich (95, 83) zur Positionierung des Schiebers (90) und des Drosselgehäuses (66) an mehreren Orten vorgesehen ist, und wobei der Schieber (90) und das Drosselgehäuse (66) voneinander getrennt sind, an anderen Positionen als der Positionierungs- und Passungsbereich (95, 83), in einem Nichtbetriebszustand des Gasgriffs (65).

7. Struktur der Betriebseinheit für ein Fahrzeug vom Satteltyp nach Anspruch 5, wobei die Endkappe (120) mit einer wasserdichten Dichtung (131) zur Blockierung der Lücke zwischen dem Kabeläußeren (101A, 102A) und dem Kerndraht (101B, 102B) vorgesehen ist.

8. Struktur der Betriebseinheit für ein Fahrzeug vom Satteltyp nach einem der Ansprüche 1 bis 7, wobei das Drosselgehäuse (66) eine Kabelöffnung (65H) aufweist, in der das Drosselkabel (101, 102) eingefügt ist, und mit einem Dichtungselement (133) zur Blockierung der Lücke zwischen der Kabelöffnung (65H) und dem Drosselkabel (101, 102) vorgesehen ist.

## Revendications

1. Structure d'unité de fonctionnement pour un véhicule du type à selle, comprenant :
une poignée des gaz (65) qui est assemblée de manière relativement rotative à un guidon (12A) ;
une vanne d'étranglement (45V) pour ajuster la quantité d'air devant être fournie à un moteur à combustion interne (14) ;
un câble d'accélérateur (101, 102) qui a un fil central (101B, 102B) et une enveloppe de câble (101A, 102A) recouvrant le fil central (101B, 102B), une partie d'extrémité d'un côté du fil central (101B, 102B) étant fixée à la poignée des gaz (65) alors que la partie d'extrémité de l'autre côté du fil central est fixée à la vanne d'étranglement (45V), et actionne la vanne d'étranglement (45V) en tirant sur le fil central (101B, 102B) sous l'effet d'un actionnement de la poignée des gaz (65) ;
un boîtier papillon (66) qui contient le câble d'accélérateur (101,102), le boîtier papillon (66) étant configuré en une structure divisée pour pincer une partie de la poignée des gaz (65) et est fixé au guidon (12A),
et un curseur (90) qui est pincé par le boîtier papillon (66) et guide une partie courbée (101C, 102C) du fil central (101B, 102B) sorti de l'enveloppe de câble (101A, 102A) et un support pour câble (91, 92) qui est fourni au curseur (90) et configuré pour restreindre le mouvement dans un sens longitudinal du câble d'accélérateur (101, 102) et rendre le câble d'accélérateur (101,102) séparable du curseur (90), sont fournis ;
**caractérisée en ce que** la poignée des gaz (65) est dotée d'une partie d'arrêt (65C1, 65C2) ayant une face dans le sens de rotation d'une poignée ; et
le curseur (90) est doté d'une partie recevant la partie d'arrêt (96, 97) avec laquelle la partie d'arrêt (65C1, 65C2) est mise en contact pour restreindre une plage de rotation de la poignée des gaz (65).

2. Structure d'unité de fonctionnement pour un véhicule du type à selle selon la revendication 1, dans laquelle des faces de contact de la partie d'arrêt (65C1, 65C2) et de la partie recevant la partie d'arrêt (96, 97) sont formées le long d'un plan s'étendant dans le sens radial par rapport au centre de rotation (C1) de la poignée des gaz (65).

3. Structure d'unité de fonctionnement pour un véhicule du type à selle selon la revendication 1 ou 2, dans laquelle le câble d'accélérateur (101, 102) a un câble côté ouvert (101) qui actionne la vanne d'étranglement (45V) à un côté ouvert sous l'effet d'une opération d'ouverture de la poignée des gaz (65), et un câble côté fermé (102) qui actionne la vanne d'étranglement (45V) à un côté fermé sous l'effet d'une opération de fermeture de la poignée des gaz (65), et les deux câbles (101, 102) sont maintenus par les supports pour câble (91, 92) du curseur (90).

4. Véhicule du type à selle selon l'une quelconque des revendications 1 à 3, dans lequel le support pour câble (91, 92) a une partie se déformant (111) qui tient la partie d'extrémité de l'enveloppe de câble (101A, 102A) et se déploie dans un sens radial de l'enveloppe de câble (101A, 102A) lorsque la partie d'extrémité de l'enveloppe de câble (101A, 102A) est sortie, et le boîtier papillon (66) pince la partie se déformant (111) pour restreindre le déploiement dans le sens radial de la partie se déformant (111).

5. Structure d'unité de fonctionnement pour un véhicule du type à selle selon la revendication 4, dans laquelle un capuchon d'extrémité (120) ayant un diamètre extérieur plus grand que le diamètre extérieur de l'enveloppe de câble (101A, 102A) est fourni à la partie d'extrémité de l'enveloppe de câble (101A, 102A), le support pour câble (91, 92) a une partie trou de montage (110) dans laquelle l'enveloppe de câble (101A, 102A) est insérée conjointement avec le capuchon d'extrémité (120), une partie d'extrémité côté insertion (111) de la partie trou de montage (110) est configurée pour avoir un diamètre de trou plus petit que le diamètre extérieur du capuchon d'extrémité (120), et est dotée d'une fente (113) le long du sens longitudinal du câble de façon à pouvoir augmenter en diamètre, et le boîtier papillon (66) pince la partie trou de montage (110) pour restreindre le déploiement dans le sens radial du support pour câble (91, 92).

6. Structure d'unité de fonctionnement pour un véhicule du type à selle selon l'une quelconque des revendications 1 à 5, dans laquelle une partie de positionnement et d'ajustement (95, 83) pour positionner le curseur (90) et le boîtier papillon (66) à plusieurs endroits est fournie, et le curseur (90) et le boîtier papillon (66) sont séparés l'un de l'autre à des positions autres que la partie de positionnement et d'ajustement (95,83) dans un état de non-fonctionnement de la poignée des gaz (65).

7. Structure d'unité de fonctionnement pour un véhicule du type à selle selon la revendication 5, dans laquelle le capuchon d'extrémité (120) est doté d'un joint étanche (131) pour boucher l'espace entre l'enveloppe de câble (101A, 102A) et le fil central (101B, 102B).

8. Structure d'unité de fonctionnement pour un véhicule du type à selle selon l'une quelconque des revendications 1 à 7, dans laquelle le boîtier papillon (66) a une ouverture pour câble (65H) dans laquelle le câble d'accélérateur (101, 102) est inséré, et est doté d'un élément formant joint (133) pour boucher l'espace entre l'ouverture pour câble (65H) et le câble d'accélérateur (101,102).
